# EUROPÄISCHE PATENTSCHRIFT

(11) **EP 3 821 187 B1**
(45) Veröffentlichungstag und Bekanntmachung des Hinweises auf die Patenterteilung: **07.06.2023**
(21) Anmeldenummer: 19737048.9
(22) Anmeldetag: 02.07.2019
(51) Int. Cl.: F25D 11/00, F25D 3/00, F25D 16/00, F28D 20/02

(54) **KÜHLSYSTEM MIT TEMPERATURHALTENDEM BEHÄLTER UND KÄLTEERZEUGER**
COOLING SYSTEM WITH TEMPERATURE-MAINTAINING CONTAINER AND REFRIGERATION UNIT
SYSTÈME FRIGORIFIQUE MUNI D'UN CONTENANT DE MAINTIEN DE LA TEMPÉRATURE ET D'UN GÉNÉRATEUR DE FROID

(30) Priorität: 13.07.2018 DE 102018117031
(43) Veröffentlichungstag der Anmeldung: 19.05.2021
(73) Patentinhaber: Solfridge GmbH & Co. KG, 09113 Chemnitz (DE)
(72) Erfinder: KROPF, Marina, 81673 München (DE); KROPF, Maximilian, 81673 München (DE)
(74) Vertreter: Patentanwälte Bauer Vorberg Kayser
(86) Internationale Anmeldenummer: PCT/EP2019/067782
(87) Internationale Veröffentlichungsnummer: WO 2020/011606

(56) Entgegenhaltungen:
- EP-A1- 0 664 426
- EP-A1- 0 794 396
- WO-A1-94/05959
- WO-A1-2008/006669
- NL-A- 8 502 473

## Beschreibung

Die vorliegende Erfindung betrifft ein Kühlsystem mit einem einen Latentwärmespeicher aufweisenden temperaturhaltenden Behälter und einem Kälteerzeuger nach dem Oberbegriff des Anspruchs 1.

Gattungsgemäße Kühlsysteme sind in verschiedenen Ausführungen bereits bekannt. So zeigt beispielsweise die EP 0 794 396 A1 ein Kühlgerät mit einem mit einer Kompressionskältemaschine, die einen elektrisch betriebenen Kompressor beinhaltet, und einen in wärmeleitender Verbindung stehenden Wärmetauscher, der einen Latentwärmespeicher mit einem Phasenwechselmaterial aufweist, das Wasser sein kann. Gemäß einer Ausführung ist der Wärmetauscher in einer einen Gefrier- oder Kühlschrank begrenzenden Wandung aufgenommen, wobei eine vom Kompressor ausgehende, zum Wärmetauscher führende Kühlmittelleitung in einem Zwischenraum zwischen einer Innenwand und einer der Innenwand gegenüberliegenden und zu dieser beabstandeten außenseitigen Zwischenwand angeordnet ist. Die Kühlmittelleitung weist einen Durchmesser auf, der dem Abstand der Innenwand von der Zwischenwand entspricht, so dass der Zwischenraum von der Kühlmittelleitung in mehrere voneinander separierte Hohlräume getrennt ist, in denen das Phasenwechselmaterial aufgenommen ist.

Des Weiteren offenbart die DE 10 2015 105 064 A1 ein Speicherkühlgerät mit einer einen Lagerraum zur Lagerung temperaturempfindlicher Güter gegenüber einer Außenumgebung abgrenzenden Wandung. An einer Rückwand der Wandung ist ein schlauchförmiger Verdampferspeicher spiralförmig in einer Aluminiumschiene gehalten. Der Verdampferspeicher beinhaltet ein kältemitteldurchströmtes Rohr, das von einem koaxial angeordneten, flexiblen Schlauch umgeben ist. Der Zwischenraum zwischen dem Rohr und dem Schlauch ist mit Wasser gefüllt. Die Aluminiumschiene leitet die vom Verdampferspeicher abgegebene Kälte an die Rückwand des Speicherkühlgeräts weiter. Der Verdampferspeicher ist Teil einer am Speicherkühlgerät angebrachten Kompressionskältemaschine, deren Kühlleistung von einem elektrisch angetriebenen Verdichter (Kompressor) bereitgestellt ist.

Derartige Kühlsysteme mit einem Latentwärmespeicher bieten den allgemeinen Vorteil, dass sie eine Temperatur innerhalb eines Behälters zur Lagerung von temperaturempfindlichen Gütern über einen gewissen Zeitraum konstant bzw. die Lagerraumtemperatur während diesem Zeitraum zumindest ungleich (niedriger oder höher) einer Umgebungstemperatur des Behälters halten können, selbst wenn eine Stromversorgung zum Betrieb der Kältekompressionsmaschine, insbesondere ihres Kompressors (Verdichters), temporär, zum Beispiel aufgrund eines Stromausfalls, nicht zur Verfügung steht. Daher eignen sich diese Kühlsysteme besonders für die Lagerung von beispielsweise medizinischen Produkten, zum Beispiel Impfstoffen, in warmen Regionen, in denen eine kontinuierliche, unterbrechungsfreie Stromversorgung nicht immer gewährleistet sein kann.

WO 2008/006669 A1 offenbart ein Kühlsystem gemäß dem Oberbegriff von Anspruch 1.

Kühlsysteme dieser Art sind ebenfalls aus den Druckschriften NL 8 502 473 A, EP 0 664 426 A1 sowie WO 94/05959 A1 bekannt.

Die gattungsgemäßen Kühlsysteme mit einem Latentwärmespeicher bieten für ihren Einsatzzweck zwar bereits einige Vorteile, lassen jedoch noch Spielraum für weitere Verbesserungen, beispielsweise hinsichtlich ihres Energieverbrauchs und Wirkungsgrads, ihrer energiezufuhrunabhängig bereitgestellten Kühlleistung und Kühldauer, ihrer Verwendungs- und Transportmöglichkeiten, der Komplexität ihres Aufbaus, ihres Gewichts und dergleichen.

Vor diesem Hintergrund liegt der vorliegenden Erfindung die Aufgabe zugrunde, ein Kühlsystem mit einem einen Latentwärmespeicher aufweisenden temperaturhaltenden Behälter und einem Kälteerzeuger aufzuzeigen, das wenigstens eine der vorstehend genannten Verbesserungen gegenüber dem bekannten Stand der Technik erzielt.

Diese Aufgabe wird durch ein Kühlsystem mit den Merkmalen des Anspruchs 1 gelöst. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Diese Ausgestaltungen werden ebenfalls in den Offenbarungsumfang der vorliegenden Anmeldung einbezogen, ohne dass sie hierfür explizit in der vorliegenden Anmeldung beschrieben sein müssen. Dasselbe gilt auch für die im Zusammenhang mit den Ausführungsbeispielen offenbarten technischen Merkmale.

Es sei weiterhin angemerkt, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Erfindungsgemäß weist ein Kühlsystem einen temperaturhaltenden Behälter auf, der einen Latentwärmespeicher zur Aufrechterhaltung einer Nicht-Umgebungstemperatur über eine bestimmte Zeitdauer in einem Lagerraum zur Lagerung temperaturempfindlicher Güter aufweist. Weiter weist das Kühlsystem einen Kälteerzeuger auf, der in wärmeübertragender Weise mit dem Latentwärmespeicher koppelbar ist. Der Lagerraum ist durch eine Wandung gegenüber einer Außenumgebung abgegrenzt. Die von dem Latentwärmespeicher über einen gewissen Zeitraum in dem Lagerraum aufrechterhaltene Nicht-Umgebungstemperatur (auch Lagerraumtemperatur) unterscheidet sich also von einer die Wandung außenseitig umgebenden Umgebungstemperatur und kann höher sein, insbesondere bevorzugt jedoch niedriger, als die Umgebungstemperatur der Außenumgebung.

Als Wandung ist im Sinne der Erfindung nicht zwingend lediglich eine Wand bzw. ein Wandelement des Behälters zu verstehen. Vielmehr soll der Begriff "Wandung" der vorliegenden Erfindung das gesamte wandartige Gebilde zur Abgrenzung des Lagerraums gegen die Außenumgebung beinhalten. Die Wandung kann demnach mehrere als solche voneinander unterscheidbare Wandelemente des Behälters, beispielsweise Seiten-, Boden-, Rückwand und dergleichen, beinhalten, aber auch relativ zum Behälter bewegbare und an diesem gelagerte Wandelemente, wie beispielsweise Türen bzw. Türelemente. Jedenfalls definieren alle den Behälter bildenden Wandelemente der Wandung innenseitig gemeinsam den Lagerraum. Außenseitig ist die Wandung von der Außenumgebung des Behälters umgeben.

Zudem kann die Wandung im Sinne der Erfindung auch dadurch definiert werden, dass ihre räumliche Ausdehnung in ihrer eigentlichen Wandungsebene wesentlich größer ist als in der hierzu sich im Wesentlichen senkrecht erstreckenden Dickenrichtung der Wandung. Die Wandung kann somit auch als im Wesentlichen plattenförmiges Objekt (eben und/oder gekrümmt) beschrieben werden.

Als in dem Lagerraum auf einer bestimmten Lagerraumtemperatur zu lagernde, temperaturempfindliche Güter sind insbesondere leicht verderbliche Lebensmittel und/oder medizinische Produkte, wie beispielsweise Impfstoffe, bevorzugt, ohne jedoch hierauf beschränkt zu sein.

Erfindungsgemäß bildet die Wandung in wenigstens einem Wandungsabschnitt einen Hohlraum zwischen einem den Hohlraum zum Lagerraum hin begrenzenden Innenwandabschnitt und einem den Hohlraum zur Außenumgebung hin begrenzenden Außenwandabschnitt aus. Hierbei ist zu verstehen, dass der Innenwandabschnitt unmittelbar an den Lagerraum grenzen kann oder an dem Innenwandabschnitt lagerraumseitig auch ein weiteres Wandelement, beispielsweise ein Verkleidungselement oder ähnliches, angeordnet und/oder befestigt sein kann. Bevorzugt grenzt der Innenwandabschnitt jedoch für eine optimale Wärmeübertragung als einziges den Hohlraum vom Lagerraum trennendes Wandelement unmittelbar an den Lagerraum. Der Außenwandabschnitt kann unmittelbar an die Außenumgebung des Behälters grenzen oder es kann ein weiteres Wandelement, beispielsweise ein den Behälter thermisch nach außen isolierendes Wandelement, außenseitig an dem Außenwandabschnitt angeordnet und/oder befestigt sein.

Weiter ist der Hohlraum gemäß der Erfindung von einem lediglich einen Teil des Hohlraumvolumens beanspruchenden Wärmeträgerkanal zum Führen eines Wärmeträgers durchquert. Mit anderen Worten tritt der Wärmeträgerkanal vorzugsweise an einer Stelle in den Hohlraum ein und tritt an einer anderen Stelle, die der Eintrittsstelle benachbart oder auch von dieser beabstandet, zum Beispiel auch diametral beabstandet, sein kann, wieder aus dem Hohlraum aus. Innerhalb des Hohlraums kann der Wärmeträgerkanal einen beliebigen Verlauf aufweisen, also zum Beispiel geradlinig, polygonal, kurvenförmig, schlangen- oder mäanderförmig und dergleichen.

Als Wärmeträger (auch als Wärmetransportmittel bezeichnet) ist ein Medium (flüssig oder gasförmig) zu verstehen, das in einem Heiz- oder Kühlkreislauf thermische Energie von einem Ort zu einem anderen Ort transportiert. Hierbei leitet der gewöhnlich als Rohr oder Schlauch (starr oder flexibel) ausgebildete Wärmeträgerkanal den Wärmeträger in die entsprechende Richtung.

Erfindungsgemäß ist der Hohlraum ferner ausgebildet, ein Phasenwechselmaterial (auch als "Phase Change Material" oder PCM bezeichnet) aufzunehmen. Insbesondere ist hierbei das restliche Hohlraumvolumen des Hohlraums, das sich aus dem ursprünglichen Hohlraumvolumen abzüglich des von dem Wärmeträgerkanal beanspruchten Hohlraumvolumens ergibt, mit einem eine wärmeübertragende Wirkverbindung mit dem Wärmeträgerkanal bildenden Phasenwechselmaterial füllbar.

In an sich wohl bekannter Weise bilden Phasenwechselmaterialien Latentwärmespeicher, die einen hohen Anteil von Wärme- und Kälteenergie speichern und als Wärme bzw. Kälte je nach Bedarf zeitlich verschoben wieder abgeben. Neben der reinen Wärmekapazität des Phasenwechselmaterials macht man sich dabei die oftmals hohe latente Wärme im Zusammenhang mit Phasenübergängen erster Ordnung wie Fest-Flüssig zu Nutze. Als Speichermedium werden gewöhnlich Lösungen von Salzen (z. B. Glaubersalz, Natriumacetat) oder organische Verbindungen (z. B. Paraffine, Fettsäuren) verwendet. Diese verändern unter Wärmelasten ihren Aggregatzustand (flüssigfest) und nehmen dabei Wärmeenergie auf bzw. geben sie ab. Da Latentwärmespeicher bzw. viele hierzu verwendeten, geeigneten Phasenwechselmaterialien bereits hinreichend im Stand der Technik beschrieben sind, wird nachfolgend auf eine weitergehende Beschreibung dieser verzichtet.

Die Erfindung sieht weiter vor, dass der Wärmeträgerkanal so in dem Hohlraum angeordnet ist, dass das Phasenwechselmaterial den Wärmeträgerkanal vollständig, das heißt allseitig, umgibt und mit dem gesamten, dem Hohlraum zuzuordnenden Innenwandabschnitt in stofflichem Kontakt steht.

Mit anderen Worten sind der Wärmeträgerkanal, das Phasenwechselmaterial und der Lagerraum thermisch in Reihe geschaltet. Dies ermöglicht einerseits eine größtmögliche Wärmeübertragung zwischen dem Wärmeträgerkanal bzw. dem in diesem geführten Wärmeträger und dem Phasenwechselmaterial, so dass ein vollständiges thermisches Aufladen des Phasenwechselmaterials in kürzester Zeit und zudem besonders energieeffizient möglich ist. Dies ist beispielsweise besonders dann von großem Vorteil, wenn die vom Wärmeträger transportierte, zum Aufladen des Phasenwechselmaterials erforderliche thermische Energie nur in einem relativ begrenzten Zeitraum zur Verfügung steht. Hierdurch ergeben sich besondere Vorteile des erfindungsgemäßen Kühlsystems in Anwendungsszenarien, in denen eine thermische Energiezufuhr zum Aufladen des Latentwärmespeichers bzw. Phasenwechselmaterials regelmäßig nur sporadisch und/oder kurzzeitig zur Verfügung steht.

Des Weiteren ermöglicht die erfindungsgemäße Anordnung des Wärmeträgerkanals im Hohlraum, das heißt eine zu dem Innenwandabschnitt und zu dem Außenwandabschnitt beabstandete Anordnung im Hohlraum, dass das das Phasenwechselmaterial vollständig in stofflichem und unmittelbarem Kontakt mit dem Innenwandabschnitt der Wandung stehen kann. Der Innenwandabschnitt weist somit eine durch das Phasenwechselmaterial bestimmte, im Wesentlichen großflächig gleichmäßige Temperatur auf, was die Kühlleistung des Kühlsystems insgesamt verbessert. Ist die thermische Energiezufuhr in das Phasenwechselmaterial über den Wärmeträger unterbrochen, gewährleistet das Phasenwechselmaterial durch den vollständigen Kontakt mit dem Innenwandabschnitt über eine bestimmte Zeitdauer weiterhin eine hohe Stabilität der Temperatur des angrenzenden Innenwandabschnitts und damit der Nicht-Umgebungstemperatur im Lagerraum, das heißt der Lagerraumtemperatur.

Ein weiterer Vorteil des erfindungsgemäßen Kühlsystems ist darin zu sehen, dass der Hohlraum dazu ausgebildet und eingerichtet ist, wahlweise zu einem beliebig bestimmbaren, insbesondere späten Zeitpunkt mit dem Phasenwechselmaterial befüllt zu werden. Damit ist es möglich, das Kühlsystem beispielsweise zunächst ohne Phasenwechselmaterial an seinen eigentlichen Einsatzort zu transportieren und erst vor Ort dem Kühlsystem das Phasenwechselmaterial zuzuführen. Auf diese Weise lässt sich das Kühlsystem mit einem deutlich verringerten Gewicht transportieren, was insbesondere bei relativ großen Transportwegen von großem Vorteil ist.

Eine vorteilhafte Ausgestaltung der Erfindung sieht vor, dass die Wandung mehrere, über jeweils eine Zwischenwand aneinander angrenzende Wandungsabschnitte mit je einem Hohlraum aufweist. Hierdurch lässt sich die mechanische Gesamtstabilität der Wandung, in der eine Vielzahl an Wandungsabschnitten mit Hohlräumen vorgesehen ist, auf konstruktiv einfache Weise wesentlich erhöhen, da die Gewichtskraft des in die Hohlräume eingefüllten Phasenwechselmaterials wesentlich gleichmäßiger mit Hilfe der Zwischenwände in die Gesamtwandung eingeleitet und von dieser abgeführt wird.

Um eine besonders effiziente und gleichmäßige Kühlleistung des Kühlsystems und eine hohe Temperaturstabilität der Lagerraumtemperatur zu gewährleisten, ist der bzw. jeder Hohlraum bevorzugt im Wesentlichen vollständig mit dem Phasenwechselmaterial gefüllt.

In weiterer vorteilhafter Ausgestaltung der Erfindung ist das Phasenwechselmaterial Wasser oder eine wässrige Lösung, zum Beispiel eine wässrige Salzlösung. Zusätzlich zu den allgemein bekannten und vorteilhaften Wärmekapazitätseigenschaften von Wasser ist Wasser auch nahezu an jedem Einsatzort leicht verfügbar bzw. zu erhalten, so dass insbesondere bei der Verwendung von Wasser als Phasenwechselmaterial das niedrige Transportgewicht des ohne Phasenwechselmaterial transportierbaren Kühlsystems erhebliche Vorteile mit sich bringt. Am Einsatzort des Kühlsystems lässt sich das dort verfügbare Wasser in einfacher Weise in den bzw. die Hohlräume der Wandung einfüllen.

Die Anzahl und das jeweilige Volumen des/der in der Wandung vorgesehenen Hohlraums/Hohlräume kann vorzugsweise so bemessen sein, dass in der Wandung des Behälters insgesamt etwa 5 L bis etwa 15 L Wasser, zum Beispiel etwa 8 L bis etwa 12 L oder etwa 10 L Wasser als Phasenwechselmaterial enthalten sind.

Die Erfindung sieht vor, dass der Hohlraum wenigstens teilweise mit einem Superabsorber (auch als "Superabsorbent Polymers" oder SAP bezeichnet) gefüllt ist. In Kombination mit Wasser als Phasenwechselmaterial ist der Superabsorber mit der Handelsbezeichnung HVDE 912 bevorzugt, da er sich durch eine besonders hohe Absorptionsfähigkeit auszeichnet. Andere Superabsorber mit ähnlichen Absorptionseigenschaften können ebenfalls verwendet werden. Der Superabsorber erleichtert die Handhabung des Kühlsystems erheblich, da das Phasenwechselmaterial bei Bewegungen des Behälters nicht unkontrolliert in einem beispielsweise nur teilweise gefüllten Hohlraum umherschwappen kann, da es im Superabsorber gebunden ist. Außerdem wird ein unkontrolliertes Auslaufen des Phasenwechselmaterials bei unsachgemäßer Handhabung des Behälters bzw. bei einer Beschädigung der die Hohlräume aufweisenden Wandung sicher verhindert.

Gemäß der Erfindung ist der Hohlraum wenigstens teilweise mit Graphen gefüllt. Hierdurch lässt sich in besonders vorteilhafter Weise die Wärmeleitfähigkeit des Phasenwechselmaterials modulieren, insbesondere signifikant erhöhen, so dass eine Wärmeübertragung zwischen dem Wärmeträgerkanal und dem Phasenwechselmaterial bis hin zum Innenwandabschnitt deutlich effizienter stattfinden kann.

In vorteilhafter Weiterbildung der Erfindung ist/sind der Superabsorber und/oder das Graphen pulverförmig im Hohlraum vorgesehen. Hierdurch lässt sich der Superabsorber bzw. das Graphen besonders gleichmäßig mit dem Phasenwechselmaterial mischen. Auch miteinander lassen sich der pulverförmige Superabsorber und das pulverförmige Graphen in geeigneter Weise und ohne großen Aufwand mischen, bevor die Mischung in den Hohlraum eingebracht wird, so dass die mit dem Superabsorber und/oder dem Graphen modulierten Eigenschaften des Phasenwechselmaterials dem zu erreichenden Ergebnis entsprechen.

Gemäß einer vorteilhaften Ausgestaltung der Erfindung ist der Kälteerzeuger eine Kältekompressionsmaschine mit einem elektrisch betriebenen Kompressor, der aus einer elektrischen Energiequelle gespeist ist. Kältekompressionsmaschinen sind an sich wohl bekannt und weisen neben dem Kompressor weitere Komponenten auf, wie beispielsweise Verdampfer, Kondensator, Kältemittel, Kältemittelleitung(en) etc. Deren Auf- bzw. Zusammenbau und Funktionsweise sind hinlänglich bekannt, so dass auf eine weitere Beschreibung hierin verzichtet wird. Es versteht sich, dass das in der Kältekompressionsmaschine zirkulierende, gekühlte Kältemittel dem im Wärmeträgerkanal geführten Wärmeträger entsprechen kann, so dass die Kältekompressionsmaschine (= Kälteerzeuger) in wärmeübertragender Weise mit dem Latentwärmespeicher verbindbar bzw. verbunden ist.

Vorzugsweise kann die elektrische Energiequelle zur Versorgung des Kompressors gemäß einer weiteren vorteilhaften Ausgestaltung eine Wechselspannungsquelle, insbesondere beispielsweise eines herkömmlichen Niederspannungsversorgungsnetzes (z. B. 110 V oder 230 V), oder eine Gleichspannungsquelle sein. Der Kompressor kann hierbei vorteilhaft so ausgebildet sein, dass er direkt an die Wechselspannungsquelle als Wechselspannungskompressor bzw. an die Gleichspannungsquelle als Gleichspannungskompressor angeschlossen werden kann, so dass auf zusätzliche, zwischen die Spannungsquelle und den Kompressor einzufügende Spannungswandlerkomponenten verzichtet werden kann. Das Kühlsystem weist somit ein geringes Gewicht auf und einen einfachen Aufbau mit einer geringen Anzahl an potentiellen Fehlerquellen.

Eine noch weitere vorteilhafte Ausgestaltung der Erfindung sieht vor, dass die elektrische Energiequelle eine photovoltaische Energiequelle ist. So kann die elektrische Energie beispielsweise mittels einer bzw. mehreren Solarzellenmodulen bereitgestellt werden. Vorzugsweise kann der Kompressor in einem solchen Fall ein Gleichspannungskompressor sein, so dass keine Spannungswechselrichtung der von den Solarmodulen bereitgestellten Gleichspannung für einen Wechselspannungskompressor erforderlich ist.

Der Behälter kann weiterhin in bevorzugter Weise Teil eines Kühlschranks sein, beispielsweise eines Haushaltskühlschranks und/oder Industriekühlschranks zur Lagerung temperaturempfindlicher Güter. Im Sinne dieser Ausgestaltung liegt bei einem solchen Kühlschrank in erster Linie ein im Wesentlichen stationärer Gebrauch vor.

Weiterhin kann es vorteilhaft sein, wenn der Kälteerzeuger mechanisch mit dem Behälter in tragender Bauweise verbunden ist, so dass das Kühlsystem ein in sich geschlossenes System in einer baulichen Einheit bildet.

Nach einer vorteilhaften alternativen Ausgestaltung der Erfindung kann der Kälteerzeuger aber auch von dem Behälter räumlich abgesetzt, das heißt entfernt, beispielsweise in einem Bereich von etwa 1 bis 5 Metern oder auch darüber hinaus, angeordnet sein und lediglich mittels entsprechender Wärmeträgerverbindungsleitungen an den Wärmeträgerkanal in wärmeträgeraustauschender Weise anschließbar bzw. angeschlossen sein. Die Wärmeträgerverbindungsleitungen stellen im mit dem Behälter fluidleitend verbundenen Zustand die einzige mechanische Verbindung zwischen dem räumlich entfernt angeordneten Kälteerzeuger und dem temperaturhaltenden Behälter dar. Das Kühlsystem weist bevorzugt einen entsprechenden Wärmeträgerverbindungsanschluss zur fluidleitenden Kopplung der Wärmeträgerverbindungsleitungen des Kälteerzeugers mit dem Wärmeträgerkanal des Latentwärmespeichers auf. Selbstverständlich können Wärmeträgerverbindungsleitungen zusätzlich oder alternativ auch von dem Latentwärmespeicher des Behälters ausgehen und an einem dem Kälteerzeuger zugeordneten, entsprechenden Wärmeträgerverbindungsanschluss anschließbar bzw. angeschlossen sein. Die wärmeträgerleitende Verbindung zwischen dem Kälteerzeuger und dem Latentwärmespeicher des Behälters ist bei dieser Ausgestaltung des vom Behälter abgesetzt/entfernt angeordneten Kälteerzeugers vorzugsweise trennbar, so dass der Behälter beispielsweise ohne Kälteerzeuger mit einem besonders geringen Gewicht transportiert werden kann. Der Behälter weist dann einen noch einfacheren Aufbau auf.

Der abgesetzte Kälteerzeuger kann darüber hinaus für eine deutlich höhere Kühlleistung ausgelegt sein als ein am Behälter angeordneter, in der Regel klein und kompakt bauender Kälteerzeuger. Hierdurch lässt sich ebenfalls der Wirkungsgrad der Kälteerzeugung und damit des gesamten Kühlsystems erhöhen.

Im Sinne einer noch weiteren vorteilhaften Ausgestaltung der Erfindung ist der Behälter ein Gütertransportbehälter für den Transport der temperaturempfindlichen Güter. Hierbei kann eine Kombination mit der vorbeschriebenen, vom Behälter abgesetzten Anordnung des Kälteerzeugers mit einer zwischen dem Kälteerzeuger und dem Latentwärmespeicher trennbaren Wärmeträgerverbindungsleitung besonders vorteilhaft sein. Der Transportbehälter ist hochmobil, kann möglicherweise komfortabel von einer einzigen Person getragen werden, weist aufgrund des nicht am Behälter angebrachten Kühlerzeugers ein geringes Gewicht auf und ist praktisch wartungsfrei. Der Transportbehälter kann ebenso ein im Wesentlichen industriell eingesetzter Transportbehälter, beispielsweise in Ausgestaltung eines Transportcontainers, sein, der dann vorzugsweise mittels geeigneten Fahr- und/oder Flugzeugen und/oder Schiffen transportiert werden kann.

Nach einer noch weiteren vorteilhaften Ausgestaltung der Erfindung ist der Gütertransportbehälter an einem Kraftfahrzeug, besonders bevorzugt an einem elektromotorisch betriebenen Kraftfahrzeug (Elektrofahrzeug), angeordnet und mit diesem wenigstens temporär, nämlich während eines Transports, verbunden. Neben kleineren Elektrofahrzeugen, zum Beispiel Personenkraftwagen, Kleinbussen, Vans, Transporter etc., sind insbesondere auch Elektrolastkraftwagen (eLKW), Elektrobusse und dergleichen bevorzugt. Aufgrund der vom Latentwärmespeicher dem temperaturhaltenden Behälter bereitgestellten Kühlleistung benötigt der Transportbehälter während der bestimmten Temperaturhaltedauer, die bevorzugt wenigstens der vorgesehenen Transportdauer des Behälters entspricht, keine aus einer elektrischen Energiequelle, beispielsweise einer Batterie bzw. Traktionsbatterie, des Elektrofahrzeugs bereitzustellende elektrische Energie, um den Kälteerzeuger, insbesondere beispielsweise dessen Kompressor, zu betreiben. Hierdurch lässt sich die maximal mit einer Batterieladung erzielbare Reichweite des Elektrofahrzeugs erheblich vergrößern.

Reicht die vom Behälter maximal erzielbare Temperaturhaltedauer nicht für den gesamten Transportweg aus, kann u. U. eine Zwischenaufladung des Phasenwechselmaterials erfolgen, beispielsweise an einem vom Behälter abgesetzt angeordneten, entlang einer Fahrroute des Elektrofahrzeugs lokalisierten (zentralen) Kälteerzeuger (ähnlich einer "Tankstelle").

Alternativ oder zusätzlich ist auch eine Kombination des Transportbehälters mit einem mitgeführten Kälteerzeuger über eine mit dem Transportbehälter ebenfalls mitgeführte Solarstromversorgung (Solar-/Photovoltaikmodule) in vorteilhafter Weise möglich. Die Solar-/Photovoltaikmodule können an dem Behälter angebracht sein.

Gemäß einer noch weiteren vorteilhaften Ausgestaltung der Erfindung weist das elektromotorisch betriebene Kraftfahrzeug eine hinsichtlich ihres Aufbaus und ihrer Funktion wohl bekannte (herkömmliche) Klimaanlage zur Temperierung eines Insasseninnenraums auf. In diesem Fall kann eine der Klimaanlage zugeordnete Kühlmittelleitung eines Kühlmittelkreislaufs in wärmeträgeraustauschender Weise wahlweise mittels eines oder mehreren steuerbaren Ventilen mit dem Wärmeträgerkanal des Latentwärmespeichers des Behälters verbindbar sein. In ganz besonders vorteilhafter Weise lässt sich so mit einem aufgeladenen Latentwärmespeicher des mitgeführten Behälters Kälte aus dem Latentwärmespeicher zum alleinigen Betreiben oder wenigstens zur Unterstützung der fahrzeugeigenen Klimaanlage bereitstellen, die ansonsten alleine aus der Fahrzeug- bzw. Traktionsbatterie des Elektrofahrzeugs gespeist würde, wodurch sich die mit einer Batterieladung maximal erzielbare Reichweite des Elektrofahrzeugs weiter deutlich erhöhen lässt.

Umgekehrt ist es in bestimmten Situationen auch möglich, den Latentwärmespeicher über die Fahrzeugklimaanlage (wenigstens teilweise) durch Wärmeträgertransport von der Klimaanlage durch den Wärmeträgerkanal des Latentwärmespeichers zu laden. Ein Steuerventil kann entsprechend zur Steuerung der jeweiligen Wärmeträgertransportrichtung vorgesehen sein.

In weiterer vorteilhafter Ausgestaltung der Erfindung ist der Kälteerzeuger Teil einer elektrischen Ladestation zum elektrischen Aufladen einer Traktionsbatterie des elektromotorisch betriebenen Kraftfahrzeugs. Der Kälteerzeuger ist somit ein vom Behälter räumlich getrennter bzw. trennbarer Kälteerzeuger, wie vorstehend bereits beschrieben wurde. Die elektrische Aufladung der Traktionsbatterie kann somit zeitgleich zur thermischen Aufladung des Latentwärmespeichers des mit dem Elektrofahrzeug mitgeführten Behälters erfolgen.

Weitere Merkmale und Vorteile der Erfindung ergeben sich aus der folgenden Beschreibung nicht einschränkend zu verstehender Ausführungsbeispiele der Erfindung, die den Fachmann in die Lage versetzen sollen, die vorliegende Erfindung auszuführen. Die Ausführungsbeispiele werden im Folgenden unter Bezugnahme auf die Zeichnung näher erläutert. In dieser Zeichnung zeigen schematisch:
- Fig. 1: eine perspektivische Vorderansicht eines Ausführungsbeispiels eines Kühlsystems gemäß der Erfindung,
- Fig. 2: eine plane Vorderansicht des Kühlsystems aus Fig. 1,
- Fig. 3: eine perspektivische Rückansicht des Kühlsystems aus Fig. 1 von schräg unten,
- Fig. 4: eine plane Rückansicht des Kühlsystems aus Fig. 3 und
- Fig. 5: eine Seitenansicht eines weiteren Ausführungsbeispiels eines Kühlsystems gemäß der Erfindung.

In den unterschiedlichen Figuren sind hinsichtlich ihrer Funktion gleichwertige Teile stets mit denselben Bezugszeichen versehen, so dass diese in der Regel auch nur einmal beschrieben werden.

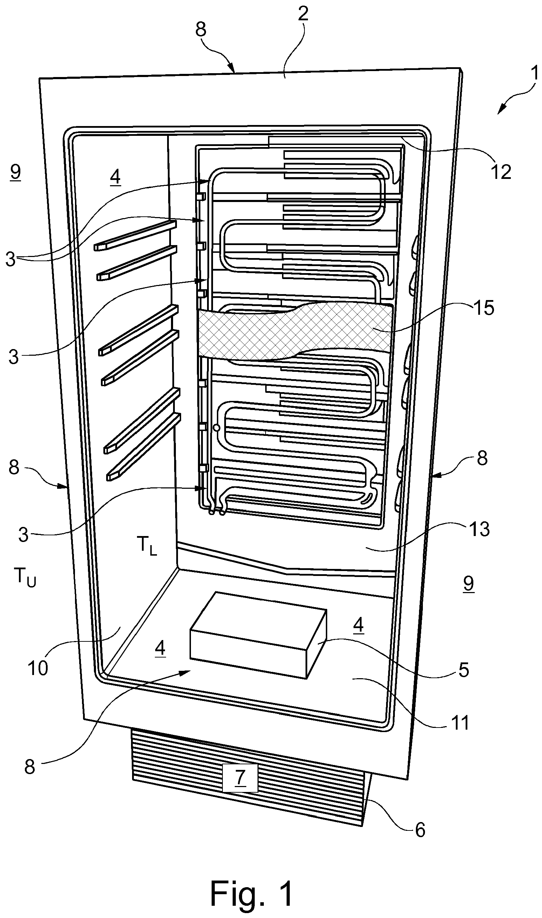

Fig. 1 stellt schematisch eine perspektivische Vorderansicht eines Ausführungsbeispiels eines Kühlsystems 1 gemäß der Erfindung dar. Das Kühlsystem 1 weist einen temperaturhaltenden Behälter 2 auf, der in dieser Ausführungsform als Teil bzw. Gehäuse eines Haushaltskühlschranks ausgebildet ist. Der Behälter 2 weist mehrere Latentwärmespeicher 3 zur Aufrechterhaltung einer Nicht-Umgebungstemperatur T_{L} über eine bestimmte Zeitdauer in einem Lagerraum 4 zur Lagerung temperaturempfindlicher Güter 5 auf. Von den insgesamt am Behälter 2 des gezeigten Ausführungsbeispiels vorgesehenen acht Latentwärmespeichern 3 sind in Fig. 1 vier explizit gekennzeichnet.

Des Weiteren weist das Kühlsystem 1 einen in einem Sockel 6 des Behälters 2 aufgenommenen, in Fig. 1 lediglich angedeuteten Kälteerzeuger 7, vorliegend in Gestalt einer herkömmlichen Kältekompressionsmaschine mit einem elektrisch betreibbaren Kompressor (nicht explizit dargestellt), auf. Durch die Unterbringung des Kälteerzeugers 7 in dem mechanisch mit dem Behälter 2 verbundenen Sockel 6 ist der Kälteerzeuger 7 in mechanisch tragender, eine Baueinheit mit dem Behälter 2 bildenden Weise mit letzterem verbunden. Der Kälteerzeuger 7 ist bei dem gezeigten Ausführungsbeispiel in wärmeübertragender Weise mit jedem Latentwärmespeicher 3 gekoppelt.

Weiter ist Fig. 1 zu entnehmen, dass der Lagerraum 4 durch eine Wandung 8 gegenüber einer Außenumgebung 9 abgegrenzt ist. Die Wandung 8 beinhaltet bei dem in Fig. 1 gezeigten Kühlsystem 1 im Wesentlichen zwei Seitenwände 10, einen Boden 11, eine Decke 12 und eine Rückwand 13 und bildet in ihrer Gesamtheit den den Lagerraum 4 umschließenden Behälter 2. Um einen Blick ins Innere der Behälters 2 werfen zu können, ist der Vorderwandteil der Wandung 8 in Fig. 1 nicht dargestellt. Es ist zu verstehen, dass dieser Vorderwandteil der Wandung 8 als Behältertür (nicht dargestellt) an dem in Fig. 1 dargestellten Teil der Wandung 8 schwenkbeweglich angebracht sein kann. Im Sinne der vorliegenden Erfindung wird die nicht dargestellte Behältertür ebenfalls als Bestandteil der Wandung 8 angesehen.

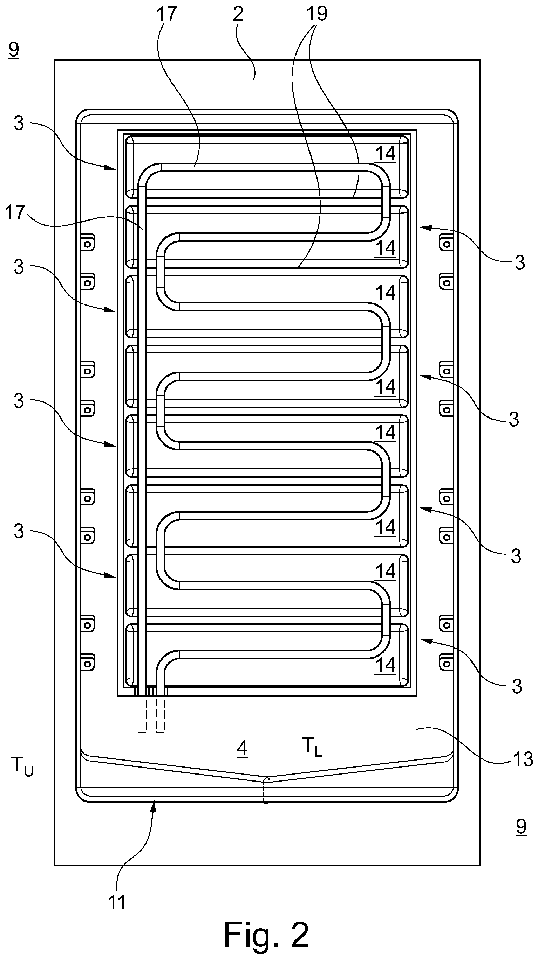

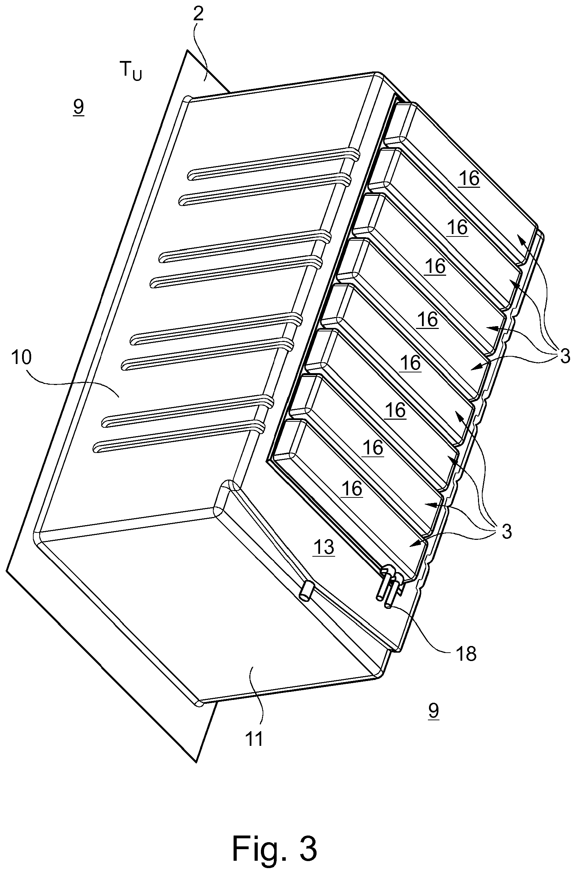

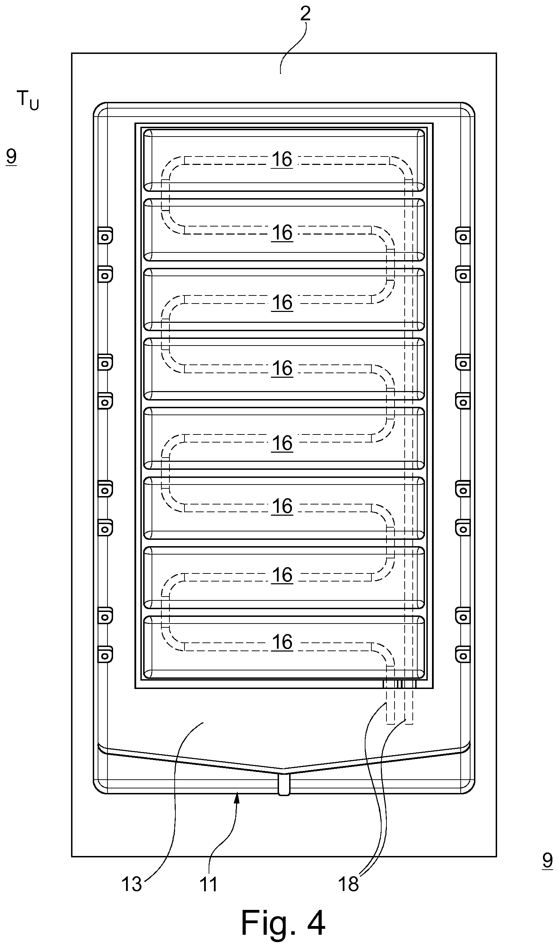

Fig. 2 stellt eine plane Vorderansicht des Kühlsystems 1 aus Fig. 1 ohne Sockel 6 dar, Fig. 3 eine perspektivische Rückansicht des Kühlsystems 1 aus Fig. 1 von schräg unten ebenfalls ohne Sockel 6 und Fig. 4 eine plane Rückansicht des Kühlsystems 1 aus Fig. 3.

Wie in Fig. 2 zu erkennen ist, weist die Wandung 8 an den den Latentwärmespeichern 3 entsprechenden Wandungsabschnitten jeweils einen Hohlraum 14 auf. Dieser ist jeweils zwischen einem den jeweiligen Hohlraum 14 zum Lagerraum 4 hin begrenzenden, lediglich in Fig. 1 abschnittsweise eingezeichneten Innenwandabschnitt 15 und einem den jeweiligen Hohlraum 14 zur Außenumgebung 9 hin begrenzenden, in den Fig. 3 und 4 dargestellten Außenwandabschnitt 16 ausgebildet. Wie insbesondere Fig. 2 deutlich zu entnehmen ist, ist jeder Hohlraum 14 von einem lediglich einen Teil des Hohlraumvolumens beanspruchenden Wärmeträgerkanal 17 zum Führen eines Wärmeträgers durchquert. Der rohrförmig ausgebildete Wärmeträgerkanal 17 verläuft in jedem Hohlraum 14 im Wesentlichen einmal über dessen gesamte Breite und ist insgesamt schlangenförmig alle Hohlräume 14 durchquerend ausgebildet. An seinen beiden bodenseitigen Enden weist der Wärmeträgerkanal 17 jeweils Anschlussstücke 18 zur Herstellung einer fluidleitenden, das heißt wärmeträgeraustauschenden, Verbindung mit dem Kälteerzeuger 7 (Fig. 1) auf.

Das in jedem Hohlraum 14 verbleibende restliche Hohlraumvolumen ist mit einem eine wärmeübertragende Wirkverbindung mit dem Wärmeträgerkanal 17 bildenden Phasenwechselmaterial (nicht dargestellt), vorliegend Wasser bzw. eine wässrige Lösung, füllbar bzw. gefüllt, insbesondere jeweils im Wesentlichen vollständig gefüllt. Hierbei ist der Wärmeträgerkanal 17 so im jeweiligen Hohlraum 14 angeordnet, dass das Phasenwechselmaterial den Wärmeträgerkanal 17 vollständig, das heißt allseitig, umgibt und mit dem dem jeweiligen Hohlraum 14 zugeordneten gesamten Innenwandabschnitt 15 in stofflichem Kontakt steht.

Fig. 2 ist weiter zu entnehmen, dass die einzelnen, aneinander angrenzenden Hohlräume 14 über jeweilige Zwischenwände 19 voneinander getrennt sind.

Gemäß der Erfindung wird der Hohlraum 14 teilweise mit einem Superabsorber gefüllt. Vorzugsweise wird der Hohlraum 14 mit einem Superabsorber (nicht dargestellt) in pulvriger Form gefüllt, so dass das in jedem Hohlraum 14 eingefüllte Phasenwechselmaterial dort im Superabsorber gebunden ist.

Gemäß der Erfindung wird der Hohlraum 14 außerdem teilweise mit Graphen gefüllt.

Auch das Graphen liegt vorzugsweise beim Einfüllen in den Hohlraum 14 in Pulverform vor.

Bei dem gezeigten Kühlsystem 1 ist der Kälteerzeuger 7 bzw. sein Kompressor ein Wechselspannungskompressor, der unmittelbar an ein herkömmliches Niederspannungsversorgungsnetz (z. B. 110 V oder 230 V), wie es in Haushalten gewöhnlich vorhanden ist, angeschlossen werden kann. Der Kompressor könnte jedoch auch als Gleichspannungskompressor ausgebildet sein, insbesondere in Kombination mit einer einen elektrischen Gleichstrom erzeugenden Photovoltaikenergiequelle (nicht dargestellt).

Das Kühlsystem könnte ebenfalls mit einer Batterie zur unmittelbaren elektrischen Speisung eines Gleichspannungskompressors oder zur elektrischen Speisung des Wechselspannungskompressors nach einer entsprechenden Wechselrichtung ausgestattet sein, was jedoch bereits aus Gewichts-, Komplexitäts- und potentiellen Ausfallgründen bzw. möglicher Fehlerquellen eines solchen Kühlsystems nicht die am meisten bevorzugte Ausgestaltung ist.

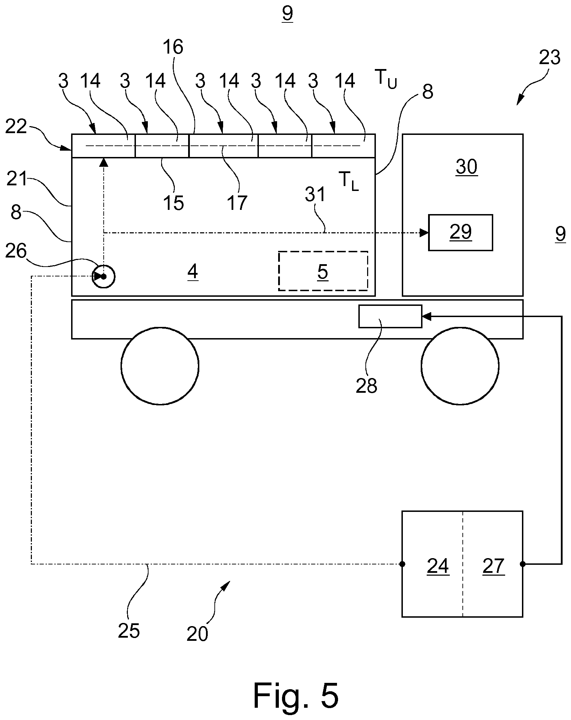

Fig. 5 stellt eine Seitenansicht eines weiteren Ausführungsbeispiels eines Kühlsystems 20 gemäß der Erfindung dar. Das Kühlsystem 20 weist ebenfalls wie das Kühlsystem 1 einen temperaturhaltenden Behälter 21 auf, der mehrere Latentwärmespeicher 3 zur Aufrechterhaltung einer Nicht-Umgebungstemperatur T_{L} über eine bestimmte Zeitdauer in einem Lagerraum 4 zur Lagerung temperaturempfindlicher Güter 5 aufweist. Die Latentwärmespeicher 3 des Behälters 21 können analog aufgebaut sein wie die Latentwärmespeicher 3 des in den Fig. 1 bis 4 dargestellten Kühlsystems 1, insbesondere hinsichtlich der durch die Wandung 8 in den entsprechenden Wandungsabschnitten gebildeten Hohlräume 14, dem Wärmeträgerkanal 17, seiner Anordnung innerhalb der Hohlräume 14, dem Phasenwechselmaterial usw. Bei dem in Fig. 5 gezeigten Kühlsystem 20 sind die Latentwärmespeicher 3 anders als beim Kühlsystem 1 in einem Deckenwandabschnitt 22 der Wandung 8 des Behälters 21 angeordnet. Bei dem in Fig. 5 dargestellten Kühlsystem 20 ist der Behälter 21 insbesondere ein Gütertransportbehälter, beispielsweise ein Transportcontainer, für den Transport der temperaturempfindlichen Güter 5.

Wie in Fig. 5 gut zu erkennen ist, ist der Transportbehälter 21 des Kühlsystems 20 an einem Kraftfahrzeug 23, das im vorliegenden Beispiel ein elektrisch angetriebener Lastkraftwagen (eLKW) ist, angeordnet und zumindest während des Transports mit diesem fest verbunden. Der Transportbehälter 21 kann auch ein permanent mit dem Elektrofahrzeug 23 verbundener Transportbehälter 21, zum Beispiel ein Kastenaufbau des Elektro-LKW, sein.

Ferner ist bei dem in Fig. 5 dargestellten Ausführungsbeispiel des Kältesystems 20 der Kälteerzeuger 24, beispielsweise ebenfalls eine an sich bekannte Kältekompressionsmaschine, von dem Behälter 21 räumlich in einer Entfernung von einigen Metern abgesetzt angeordnet und lediglich mittels entsprechender Wärmeträgerverbindungsleitungen 25 an den Wärmeträgerkanal 17 in wärmeträgeraustauschender Weise anschließbar bzw. in der in Fig. 5 dargestellten Verwendungssituation angeschlossen. Der Behälter 21 weist hierzu einen entsprechenden Wärmeträgerverbindungsanschluss 26 auf.

Darüber hinaus ist der Kälteerzeuger 24 des Kühlsystems 20 in dieser Ausgestaltung Teil einer elektrischen Ladestation 27 zum elektrischen Aufladen einer Traktionsbatterie 28 des elektromotorisch betriebenen Kraftfahrzeugs 23.

Außerdem weist das Elektrofahrzeug 23 eine Klimaanlage 29 zur Temperierung eines Insasseninnenraums 30 auf. Eine Kühlmittelleitung 31 der Klimaanlage 29 ist in wärmeträgeraustauschender Weise mit dem Wärmeträgerkanal 17 der Latentwärmespeicher 3 verbindbar bzw. verbunden. Ein Steuerventil (nicht dargestellt) kann für eine wahlweise fluidleitende Verbindung zwischen der Fahrzeugklimaanlage 29 und dem Wärmeträgerkanal 17 vorgesehen sein.

Das hierin offenbarte erfindungsgemäße Kühlsystem ist nicht auf die hierin offenbarten Ausführungsformen beschränkt, sondern umfasst auch gleich wirkende weitere Ausführungsformen, die sich aus technisch sinnvollen weiteren Kombinationen der hierin beschriebenen Merkmale des erfindungsgemäßen Kühlsystems ergeben.

In besonders bevorzugter Ausführung wird das erfindungsgemäße Kühlsystem als Kühlschrank für einen im Wesentlichen stationären Betrieb oder als portabler oder als mit einem Kraftfahrzeug, insbesondere Elektrofahrzeug, gekoppelter, mobiler Transportbehälter zur Lagerung und/oder zum Transport temperaturempfindlicher Güter verwendet.

### Bezugszeichenliste

- 1: Kühlsystem / Kühlschrank
- 2: Temperaturhaltender Behälter
- 3: Latentwärmespeicher
- 4: Lagerraum
- 5: Temperaturempfindliches Gut
- 6: Sockel
- 7: Kälteerzeuger
- 8: Wandung
- 9: Außenumgebung
- 10: Seitenwand
- 11: Boden
- 12: Decke
- 13: Rückwand
- 14: Hohlraum
- 15: Innenwandabschnitt
- 16: Außenwandabschnitt
- 17: Wärmeträgerkanal
- 18: Anschlussstück
- 19: Zwischenwand
- 20: Kühlsystem
- 21: Temperaturhaltender Behälter / Gütertransportbehälter
- 22: Deckenwandabschnitt
- 23: Elektrolastkraftwagen (eLKW)
- 24: Kälteerzeuger
- 25: Wärmeträgerverbindungsleitung(en)
- 26: Wärmeträgerverbindungsanschluss
- 27: Elektrische Ladestation
- 28: Traktionsbatterie
- 29: Klimaanlage
- 30: Insasseninnenraum
- 31: Klimaanlagenkühlmittelleitung
- T_{L}: Nicht-Umgebungstemperatur / Lagerraumtemperatur
- T_{U}: Umgebungstemperatur

## Patentansprüche

1. Kühlsystem mit einem temperaturhaltenden Behälter (2, 21), der einen Latentwärmespeicher (3) zur Aufrechterhaltung einer Nicht-Umgebungstemperatur (T_{L}) über eine bestimmte Zeitdauer in einem Lagerraum (4) zur Lagerung temperaturempfindlicher Güter (5) aufweist, und einem Kälteerzeuger (7, 24), der in wärmeübertragender Weise mit dem Latentwärmespeicher (3) koppelbar ist, wobei der Lagerraum (4) durch eine Wandung (8) gegenüber einer Außenumgebung (9) abgegrenzt ist, die in wenigstens einem Wandungsabschnitt einen Hohlraum (14) zwischen einem den Hohlraum (14) zum Lagerraum (4) hin begrenzenden Innenwandabschnitt (15) und einem den Hohlraum (14) zur Außenumgebung (9) hin begrenzenden Außenwandabschnitt (16) ausbildet, wobei der Hohlraum (14) von einem lediglich einen Teil des Hohlraumvolumens beanspruchenden Wärmeträgerkanal (17) zum Führen eines Wärmeträgers durchquert ist und das restliche Hohlraumvolumen mit einem eine wärmeübertragende Wirkverbindung mit dem Wärmeträgerkanal (17) bildenden Phasenwechselmaterial füllbar ist, wobei der Wärmeträgerkanal (17) so in dem Hohlraum (14) angeordnet ist, dass das Phasenwechselmaterial den Wärmeträgerkanal (17) vollständig umgibt und mit dem gesamten Innenwandabschnitt (15) in stofflichem Kontakt steht,
**dadurchgekennzeichnet, dass**
der Hohlraum (14) teilweise mit einem Superabsorber gefüllt ist und der Hohlraum (14) teilweise mit Graphen gefüllt ist.

2. Kühlsystem nach Anspruch 1,
**dadurch gekennzeichnet, dass**
die Wandung (8) mehrere, über jeweils eine Zwischenwand aneinander angrenzende Wandungsabschnitte mit je einem Hohlraum (14) aufweist.

3. Kühlsystem nach Anspruch 1 oder 2,
**dadurch gekennzeichnet, dass**
der Hohlraum (14) vollständig mit dem Phasenwechselmaterial gefüllt ist.

4. Kühlsystem nach einem der vorhergehenden Ansprüche,
**dadurch gekennzeichnet, dass**
das Phasenwechselmaterial Wasser oder eine wässrige Lösung ist.

5. Kühlsystem nach einem der vorhergehenden Ansprüche,
**dadurch gekennzeichnet, dass**
der Superabsorber und/oder das Graphen pulverförmig im Hohlraum () vorgesehen ist/sind.

6. Kühlsystem nach einem der vorhergehenden Ansprüche,
**dadurch gekennzeichnet, dass**
der Kälteerzeuger (7, 24) eine Kältekompressionsmaschine mit einem elektrisch betriebenen Kompressor ist, der aus einer elektrischen Energiequelle gespeist ist.

7. Kühlsystem nach dem vorhergehenden Anspruch,
**dadurch gekennzeichnet, dass**
die elektrische Energiequelle eine Wechselspannungsquelle oder eine Gleichspannungsquelle ist.

8. Kühlsystem nach einem der zwei vorhergehenden Ansprüche,
**dadurch gekennzeichnet, dass**
die elektrische Energiequelle eine photovoltaische Energiequelle ist.

9. Kühlsystem nach einem der vorhergehenden Ansprüche,
**dadurch gekennzeichnet, dass**
der Behälter (2) ein Teil eines Kühlschranks ist.

10. Kühlsystem nach einem der vorhergehenden Ansprüche,
**dadurch gekennzeichnet, dass**
der Kälteerzeuger (7) mechanisch mit dem Behälter (2) in tragender Bauweise verbunden ist.

11. Kühlsystem nach einem der Ansprüche 1 bis 9,
**dadurch gekennzeichnet, dass**
der Kälteerzeuger (24) von dem Behälter (21) räumlich abgesetzt ist und lediglich mittels entsprechender Wärmeträgerverbindungsleitungen (25) an den Wärmeträgerkanal (17) in wärmeträgeraustauschender Weise anschließbar ist.

12. Kühlsystem nach einem der vorhergehenden Ansprüche,
**dadurch gekennzeichnet, dass**
der Behälter (21) ein Gütertransportbehälter für den Transport der Güter (5) ist.

13. Kühlsystem nach dem vorhergehenden Anspruch,
**dadurch gekennzeichnet, dass**
der Gütertransportbehälter (21) an einem elektromotorisch betriebenen Kraftfahrzeug (23) angeordnet ist.

14. Kühlsystem nach dem vorhergehenden Anspruch,
**dadurch gekennzeichnet, dass**
das elektromotorisch betriebene Kraftfahrzeug (23) eine Klimaanlage (29) zur Temperierung eines Insasseninnenraums (30) aufweist, wobei eine Kühlmittelleitung (31) der Klimaanlage (29) in wärmeträgeraustauschender Weise mit dem Wärmeträgerkanal (17) wahlweise verbindbar ist.

15. Kühlsystem nach einem der Ansprüche 11, 13 oder 14,
**dadurch gekennzeichnet, dass**
der Kälteerzeuger (24) Teil einer elektrischen Ladestation (27) zum elektrischen Aufladen einer Traktionsbatterie (28) des elektromotorisch betriebenen Kraftfahrzeugs (23) ist.

## Claims

1. A cooling system with a temperature-maintaining container (2, 21), which has a latent heat store (3) for maintaining a non-ambient temperature (T_{L}) for a certain period of time in a storage space (4) for storing temperature-sensitive goods (5), and a refrigeration unit (7, 24) which can be coupled to the latent heat store (3) in a heat-transferring manner, wherein the storage space (4) is separated from the external surroundings (9) by a wall (8) which, in at least one wall section, forms a cavity (14) between an inner wall section (15) separating the cavity (14) from the storage space (4) and an outer wall section (16) separating the cavity (14) from the external surroundings (9), wherein passing through the cavity (14) there is a heat transfer medium duct (17) that occupies only a part of the cavity volume and serves for conveying a heat transfer medium, and the rest of the cavity volume can be filled with a phase-change material forming a heat-transferring operative connection with the heat transfer medium duct (17), wherein the heat transfer medium duct (17) is arranged in the cavity (14) in such a way that the phase-change material completely surrounds the heat transfer medium duct (17) and is in material contact with the entire inner wall section (15),
**characterised in that**
the cavity (14) is partially filled with a super-absorbent and the cavity (14) is partially filled with graphene.

2. The cooling system according to claim 1,
**characterised in that**
the wall (8) comprises a plurality of wall sections each adjoining one another via an intermediate wall, each with a cavity (14).

3. The cooling system according to claim 1 or 2,
**characterised in that**
the cavity (8) is completely filled with the phase-change material.

4. The cooling system according to any one of the preceding claims,
**characterised in that**
the phase-change material is water or an aqueous solution.

5. The cooling system according to any one of the preceding claims,
**characterised in that**
the super-absorbent and/or the graphene is/are provided in the cavity (14) in powder form.

6. The cooling system according to any one of the preceding claims,
**characterised in that**
the refrigeration unit (7, 24) is a refrigeration compression machine with an electrically operated compressor, which is fed from an electrical energy source.

7. The cooling system according to the preceding claim,
**characterised in that**
the electrical energy source is an AC voltage source or a DC voltage source.

8. The cooling system according to any one of the two preceding claims,
**characterised in that**
the electrical energy source is a photovoltaic energy source.

9. The cooling system according to any one of the preceding claims,
**characterised in that**
the container (2) is part of a refrigerator.

10. The cooling system according to any one of the preceding claims,
**characterised in that**
the refrigeration unit (7) is mechanically connected to the container (2) in a load-bearing construction.

11. The cooling system according to any one of claims 1 to 9,
**characterised in that**
the refrigeration unit (24) is spatially separated from the container (21) and can only be connected to the heat transfer medium duct (17) in a heat exchanging manner by means of corresponding heat transfer connection lines (25).

12. The cooling system according to any one of the preceding claims,
**characterised in that**
the container (21) is a goods transport container for the transport of goods (5).

13. The cooling system according to the preceding claim,
**characterised in that**
the goods transport container (21) is arranged on a motor vehicle (23) operated by an electric motor.

14. The cooling system according to the preceding claim,
**characterised in that**
the motor vehicle (23) operated by an electric motor comprises an air conditioning system (29) for regulating the temperature of a passenger compartment (30), wherein a coolant line (31) of the air-conditioning system (29) can optionally be connected to the heat transfer medium duct (17) in a heat transferring manner.

15. The cooling system according to any one of claims 11, 13 or 14,
**characterised in that**
the refrigerator unit (24) is part of an electrical charging station (27) for electrically charging a traction battery (28) of the motor vehicle (23) operated by an electric motor.

## Revendications

1. Système de refroidissement, pourvu d'un réservoir (2, 21) de maintien en température, qui comporte un accumulateur thermique (3) à chaleur latente, destiné à maintenir une température non ambiante (T_{L}) sur une période définie dans un espace de stockage (4) destiné à stocker des produits (5) thermosensibles et un générateur de froid (7, 24), qui est susceptible d'être accouplé de manière à transmettre la chaleur avec l'accumulateur thermique (3) à chaleur latente, l'espace de stockage (4) étant délimité par rapport à un environnement extérieur (9) par une paroi (8), qui au moins dans une partie de paroi forme une cavité (14) entre une partie de paroi (15) intérieure délimitant la cavité (14) en direction de l'espace de stockage (4) et une partie de paroi (16) extérieure délimitant la cavité (14) en direction de l'environnement extérieur (9), la cavité (14) étant traversée par une canalisation caloporteuse (17) occupant uniquement une partie du volume de la cavité, destinée à conduire un agent caloporteur et le reste du volume de la cavité pouvant être rempli d'une matériau à changement de phase, créant une liaison active de transmission de chaleur avec la canalisation caloporteuse (17), la canalisation caloporteuse (17) étant placée dans la cavité (14) de telle sorte que le matériau à changement de phase entoure totalement la canalisation caloporteuse (17) et se trouve en contact par matière avec l'ensemble de la partie de paroi (15) intérieure,
**caractérisé en ce que**
la cavité (14) est partiellement remplie d'un superabsorbant et la cavité (14) est partiellement remplie de graphène.

2. Système de refroidissement selon la revendication 1,
**caractérisé en ce que**
la paroi (8) comporte plusieurs sections de parois adjacentes les unes aux autres sur chaque fois une paroi intermédiaire, dont chacune est pourvue d'une cavité (14).

3. Système de refroidissement selon la revendication 1 ou 2,
**caractérisé en ce que**
la cavité (14) est entièrement remplie avec le matériau à changement de phase.

4. Système de refroidissement selon l'une quelconque des revendications précédentes,
**caractérisé en ce que**
le matériau à changement de phase est de l'eau ou une solution aqueuse.

5. Système de refroidissement selon l'une quelconque des revendications précédentes,
**caractérisé en ce que**
le superabsorbant et / ou le graphène est / sont prévu(s) dans la cavité (14) sous forme pulvérulente.

6. Système de refroidissement selon l'une quelconque des revendications précédentes,
**caractérisé en ce que**
le générateur de froid (7, 24) est une machine frigorifique à compression, pourvue d'un compresseur à fonctionnement électrique, qui est alimenté à partir d'une source d'énergie électrique.

7. Système de refroidissement selon la revendication précédente,
**caractérisé en ce que**
la source d'énergie électrique est une source de tension alternative ou une source de tension continue.

8. Système de refroidissement selon l'une quelconque des deux revendications précédentes,
**caractérisé en ce que**
la source d'énergie électrique est une source d'énergie photovoltaïque.

9. Système de refroidissement selon l'une quelconque des revendications précédentes,
**caractérisé en ce que**
le réservoir (2) est une partie du réfrigérateur.

10. Système de refroidissement selon l'une quelconque des revendications précédentes,
**caractérisé en ce que**
le générateur de froid (7) est mécaniquement assemblé avec le réservoir (2) en mode de construction porteuse.

11. Système de refroidissement selon l'une quelconque des revendications 1 à 9,
**caractérisé en ce que**
le générateur de froid (24) est en retrait dans l'espace par rapport au réservoir (21) et ne peut se raccorder sur la canalisation caloporteuse (17) de manière à échanger l'agent caloporteur qu'au moyen de conduites de raccordement (25) d'agent caloporteur .

12. Système de refroidissement selon l'une quelconque des revendications précédentes,
**caractérisé en ce que**
le réservoir (21) est un réservoir de transport de produits, destiné au transport des produits (5).

13. Système de refroidissement selon la revendication précédente,
**caractérisé en ce que**
le réservoir de transport de produits (21) est placé sur un véhicule automobile (23) entraîné par moteur électrique.

14. Système de refroidissement selon la revendication précédente,
**caractérisé en ce que**
le véhicule automobile (23) entraîné par moteur électrique comporte une climatisation (29) destinée à tempérer un habitacle (30), une conduite d'agent réfrigérant (31) de la climatisation (29) étant susceptible d'être raccordée sélectivement de manière à échanger l'agent caloporteur avec la canalisation caloporteuse (17).

15. Système de refroidissement selon l'une quelconque des revendications 11, 13 ou 14,
**caractérisé en ce que**
le générateur de froid (24) est une partie d'un poste de charge (27) électrique, destiné à charger en électricité une batterie de traction (28) du véhicule automobile (23) entraîné par moteur électrique.
